# EUROPEAN PATENT APPLICATION

(11) **EP 3 214 871 A1**
(43) Date of publication of application: **06.09.2017**
(21) Application number: 15856010.2
(22) Date of filing: 20.10.2015
(51) Int. Cl.: H04W 28/10, H04L 12/853, H04W 72/10

(54) **COMMUNICATION APPARATUS, COMMUNICATION METHOD, AND PROGRAM**

(30) Priority: 28.10.2014 JP 2014218987
(71) Applicant: NEC Corporation, Tokyo 108-8001 (JP)
(72) Inventor: MIYASHITA, Shigehiro, Tokyo 108-8001 (JP)
(74) Representative: Betten & Resch
(86) International application number: PCT/JP2015/005271
(87) International publication number: WO 2016/067555

(57) **Abstract**

In order to make priority control applicable to a packet from an apparatus, which requires the priority control, independently of the transfer path of the packet, a communication apparatus includes a determination unit, a setting unit, and a priority control unit. The determination unit determines whether a transmission source address of a received packet has been registered in a priority control list as an address of a first apparatus. The setting unit sets a first priority level in a predetermined field in a header of the received packet when the transmission source address of the received packet has been registered in the priority control list as the address of the first apparatus. The priority control unit performs transmission control in accordance with the first priority level with respect to the received packet in which the first priority level has been set.

## Description

### [Technical Field]

The present invention relates to a communication apparatus, a communication method, and a program, and particularly, to a communication apparatus serving as an access point, a communication method, and a program in wireless communication.

### [Background Art]

With the development of a communication technology, various services are provided on a network. For example, a number of video distribution servers (video distribution sites) exist on the network to distribute video and voice-related media data to terminals. A user accesses a video distribution server by using a smart phone or a personal computer, and reproduces streams of content supplied from the video distribution server.

Many recent mobile terminals support a wireless LAN (Local Area Network) standard such as IEEE (Institute of Electrical and Electronics Engineers) 802. 11a/b/g/n in many cases. Therefore, when a user accesses the video distribution server from his/her house and the like, the user uses a line via an access point (AP) installed in his/her house in many cases, rather than mobile communication lines using LTE (Long Term Evolution) and the like.

Furthermore, with an increase in wireless LAN-compatible terminals, there has been demanded for an access point capable of transmitting media data to the wireless LAN-compatible terminals in realtime (with low delay). In this regard, Wi-Fi (Wireless Fidelity) Alliance has defined a standard for solving arrival delay of media data. Specifically, IEEE 802.11e is employed as a WMM (Wi-Fi Multimedia) QoS (Quality of Service) specification. In the IEEE 802.11e, four types of priorities (AC: Access Category) settable to packets are defined, and an access point conforming to the IEEE 802.11e controls packet transmission in response to the priority levels set to the packets. For example, there is a case in which a VIDEO category with a high priority is set in a QoS designation field of an IP (Internet Protocol) header of a packet of media data transmitted from a video distribution server toward a terminal A. In this case, the access point transmits the media data to the terminal A in preference to packet transmission to a terminal B. The priority control scheme based on the IEEE 802.11e is called an EDCA (Enhanced Distributed Channel Access) scheme.

PTL1 discloses an apparatus that employs an EDCA scheme and adjusts EDCA parameters.

### [Citation List]

### [Patent Literature]

[PTL1] Japanese Unexamined Patent Application Publication No. 2007-006497

### [Summary of Invention]

### [Technical Problem]

It is assumed that the disclosure of the aforementioned prior art document is incorporated herein by reference. The following analysis has been made by the present inventors.

As described above, when a user accesses the video distribution server from his/her house, the user uses the access point installed in his/her house in many cases. In this case, when the number of terminals accessing the same access point is small, there is no special problem, but when the number of terminals is increased, some problems may occur.

For example, the case in which a terminal A and a terminal B access different servers (sites) through the same access point and perform data transmission/reception will be considered. More specifically, it is assumed that the terminal A reproduces streams of video content from a video distribution server and the terminal B accesses a different website and browses web pages. In this case, the access point provides the same communication opportunity (use of a channel) to the terminal A and the terminal B by fairness control based on the IEEE 802.11e.

By the fairness control, in the terminal A, it is probable that arrival delay of media data related to the video content will occur. Since the arrival delay of the media data causes interruption and the like of video reproduction, a user is not able to comfortably view a video.

In order to cope with such a problem, various countermeasures are considered. For example, it is considered to increase the size of a receiving buffer included in a terminal and to reduce the influence of the arrival delay of the media data. When the size of the receiving buffer is increased, even though the arrival delay of the media data occurs, the terminal uses media data accumulated in the receiving buffer, so that it is possible to prevent troubles from occurring in video reproduction.

However, if the screen size of a smart phone and the like is increased, higher precision (higher resolution) video is demanded, resulting in an increase in the size of required media data. Alternatively, when a user accesses a video distribution server and demands reproduction of video of interest, there is a demand for immediately viewing a video through his/her terminal (low delay demand in video reproduction). The countermeasure of increasing the size of the receiving buffer of the terminal may not be possible to sufficiently cope with continuously increasing media data and the low delay demand in reproduction of video.

In order to cope with delay of media data, it is considered to set a high priority level (for example, a VIDEO category) defined by the IEEE 802.11e in packets of media data. However, it is known that some existing routers and the like operated on the Internet will reset a value of a QoS designation field of an IP packet. Therefore, even though the video distribution server sets the VIDEO category that is a high priority level in the QoS designation field of the IP packet of the media data, it is probable that the priority level set will be invalid when the packet reaches the access point.

As a consequence, since the access point is not able to recognize media data to which a high priority level has been originally assigned, it is not possible to deal with the media data in preference to a packet from another terminal. That is, since WMM QoS processing for media data with a high priority level is not correctly performed, it is probable that it causes a trouble in video reproduction.

An object of the present invention is to provide a communication apparatus, a communication method, and a program, which are capable of applying priority control to a packet from an apparatus, which requires the priority control, independently of the transfer path of the packet.

### [Solution to Problem]

According to a first aspect of the present invention, there is provided a communication apparatus including a determination means that determines whether a transmission source address of a received packet has been registered in a priority control list as an address of a first apparatus, a setting means that sets a first priority level in a predetermined field in a header of the received packet when the transmission source address of the received packet has been registered in the priority control list as the address of the first apparatus, and a priority control means that performs transmission control in accordance with the first priority level with respect to the received packet in which the first priority level has been set.

According to a second aspect of the present invention, there is provided a communication method including determining whether a transmission source address of a received packet has been registered in a priority control list as an address of a first apparatus, setting a first priority level in a predetermined field in a header of the received packet when the transmission source address of the received packet has been registered in the priority control list as the address of the first apparatus, and performing transmission control in accordance with the first priority level with respect to the received packet in which the first priority level has been set.

According to a third aspect of the present invention, there is provided a storage medium stored with a program that causes a computer for controlling a communication apparatus to perform a process of determining whether a transmission source address of a received packet has been registered in a priority control list as an address of a first apparatus, a process of setting a first priority level in a predetermined field in a header of the received packet when the transmission source address of the received packet has been registered in the priority control list as the address of the first apparatus, and a process of performing transmission control in accordance with the first priority level with respect to the received packet in which the first priority level has been set.

The program can be recorded on a computer-readable storage medium. The storage medium can be a non-transient storage medium such as a semiconductor memory, a hard disk, a magnetic recording medium, or an optical recording medium. The present invention can also be implemented as a computer program product.

### [Advantageous Effects of Invention]

According to each aspect of the present invention, a communication apparatus, a communication method, and a program are provided, which contribute to applying priority control to a packet from an apparatus, which requires the priority control, independently of the transfer path of the packet.

### [Brief Description of Drawings]

Fig. 1 is a diagram for explaining the overview of an exemplary embodiment.
Fig. 2 is a diagram illustrating an example of a configuration of a communication system according to a first exemplary embodiment.
Fig. 3 is a diagram illustrating an example of an internal configuration of an access point according to the first exemplary embodiment.
Fig. 4 is a diagram illustrating an example of an internal configuration of a wireless LAN interface unit.
Fig. 5 is a diagram illustrating an example of a priority control list.
Fig. 6 is a diagram illustrating an example of a structure of an IP packet.
Fig. 7 is a diagram illustrating an example of a user interface that sets a priority control list.
Fig. 8 is an example of a sequence diagram for explaining an operation of the access point.
Fig. 9 is a diagram illustrating an example of a priority control list according to a second exemplary embodiment.
Fig. 10 is an example of a sequence diagram for explaining an operation of an access point according to the second exemplary embodiment.
Fig. 11 is a diagram illustrating an example of a priority control list.
Fig. 12 is a diagram illustrating an example of a configuration of a communication system according to a third exemplary embodiment.
Fig. 13 is a diagram illustrating an example of a priority control list according to the third exemplary embodiment.
Fig. 14 is a diagram illustrating an example of a priority control list.

### [Description of Embodiments]

First, the overview of an exemplary embodiment will be described. It is noted that reference numerals added to this overview are added to each element as an example for facilitating understanding for the purpose of convenience and the overview does not intend any limitation.

As described above, there is a demand for a communication apparatus capable of applying priority control to a packet from an apparatus, which requires the priority control, independently of the transfer path of the packet.

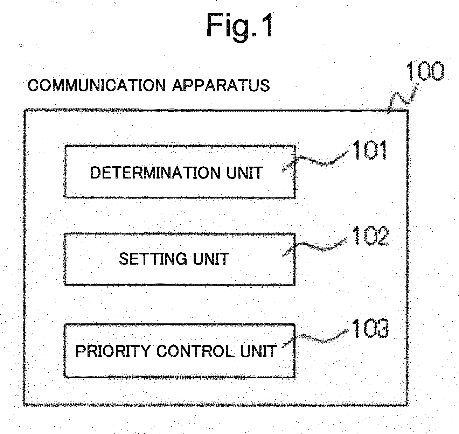

In this regard, a communication apparatus 100 illustrated in Fig. 1 is provided as an example. The communication apparatus 100 includes a determination unit 101, a setting unit 102, and a priority control unit 103. The determination unit 101 determines whether a transmission source address of a received packet has been registered in a priority control list as an address of a first apparatus. The setting unit 102 sets a first priority level in a predetermined field in a header of the received packet when the transmission source address of the received packet has been registered in the priority control list as the address of the first apparatus. The priority control unit 103 performs transmission control in accordance with the first priority level with respect to the received packet in which the first priority level has been set.

The communication apparatus 100, for example, is a wireless LAN access point conforming to WMM (Wi-Fi Multimedia), which is a QoS specification defined by Wi-Fi alliance. The communication apparatus 100 assigns a high priority level (the first priority level) to a received packet to a terminal that reproduces streams of media data from the first apparatus (for example, a video distribution server). In this case, the communication apparatus 100 refers to the priority control list in which an address of an apparatus to be subjected to priority control has been registered as whitelisted. When the communication apparatus 100 receives a packet including a transmission source address coinciding with the address registered in the priority control list, the setting unit 102 sets the first priority level in a predetermined field (QoS designation field) of the packet. The transmission of the packet in which the first priority level is set is controlled by the priority control unit 103 at a priority level higher than that of a packet from an apparatus not registered as whitelisted.

As a consequence, independently of the presence of a router and the like that reset the QoS designation field of the packet, the communication apparatus 100 can perform QoS priority control for the media data from the first apparatus. In performing the QoS priority control, the communication apparatus 100 determines that the media data is transmitted from a specific apparatus (for example, a video distribution server), by using the priority control list regardless of a QoS parameter (a setting value of the QoS designation field) that is not always guaranteed depending on a communication path. In this case, the communication apparatus 100 acts as if a specific priority level has been set in the QoS designation field, thereby avoiding arrival delay with respect to media data to a terminal subordinate to the communication apparatus 100. A packet arriving at the communication apparatus 100, wherein the value of the QoS designation field of the packet has not been reset on the path, is subjected to QoS priority control conforming to the original WMM.

Hereinafter, specific exemplary embodiments will be described in more detail with reference to the drawings. The same reference numerals are used to designate the same elements in each exemplary embodiment, and a description thereof is omitted.

### [First exemplary embodiment]

A first exemplary embodiment will be described in more detail with reference to the drawings.

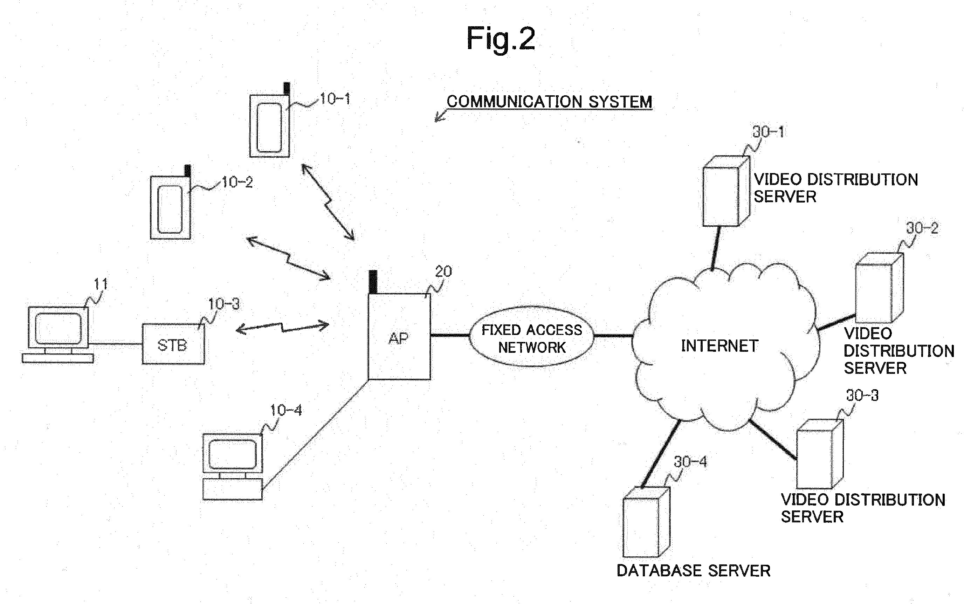

Fig. 2 is a diagram illustrating an example of a configuration of a communication system according to the first exemplary embodiment. Referring to Fig. 2, the communication system includes smart phones 10-1 and 10-2, a set-top box (STB) 10-3, a personal computer 10-4, and an access point 20. In the following description, when there is no special reason for distinguishing the smart phones 10-1 and 10-2, the set-top box (STB) 10-3, and the personal computer 10-4 connected to the access point 20 from one another, they are simply called a "terminal 10".

The smart phones 10-1 and 10-2 are mobile terminals having a wireless LAN communication function.

The set-top box 10-3 also has the wireless LAN communication function. The set-top box 10-3 generates a video signal and an audio signal from media data (an IP packet) received via the access point 20, and supplies these signals to a television 11.

The personal computer 10-4 is connected to the access point 20 in a wired manner by the Ethernet (a registered trademark, the same applies below) standard such as 100 BASE-TX.

The access point 20 serves as an access point for the smart phone 10-1 and the like, and supports the WMM QoS specification defined by the Wi-Fi alliance (conforming to the IEEE 802.11e). The access point 20 is connected to a fixed access network (for example, a line network called NGN (Next Generation Network)), which uses an IP packet managed by a communication provider, via a line termination unit (not illustrated). The access point 20 performs packet transmission/reception with respect to a server and the like on the Internet via a gateway (not illustrated) installed in the fixed access network.

The access point 20 serves as a so-called home gateway. To this end, the access point 20 has a function as a broadband router, a function as a DHCP (Dynamic Host Configuration Protocol) server, and a DNS (Domain Name System) server, in addition to a function as an access point of a Wireless LAN.

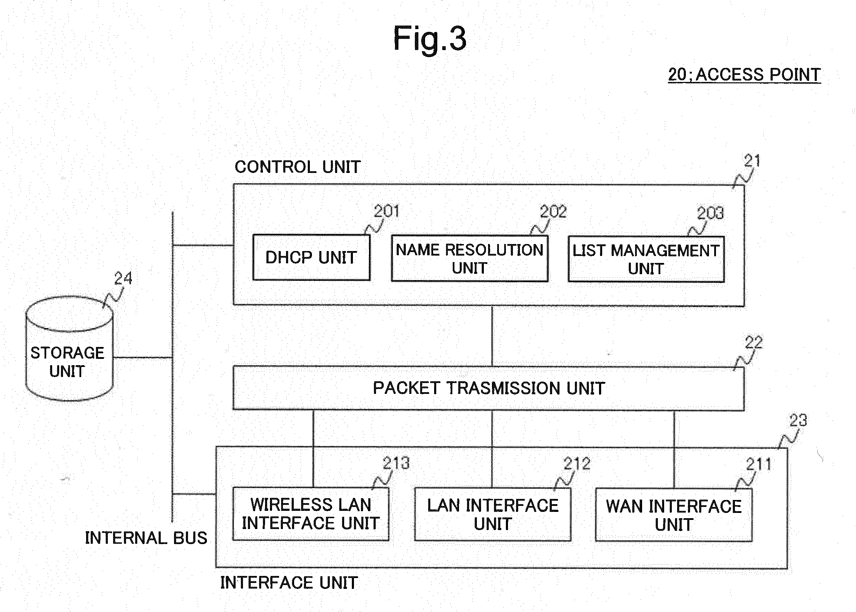

Fig. 3 is a diagram illustrating an example of an internal configuration of the access point 20. Referring to Fig. 3, the access point 20 is configured to include a control unit 21, a packet transmission unit 22, an interface unit 23, and a storage unit 24. The units constituting the access point 20 are connected to one another via an internal bus.

The control unit 21 controls the entire access point 20 and performs various functions required for the access point 20. Specifically, the control unit 21 includes a DHCP unit 201 and a name resolution unit 202 that resolves an address from a host name, and provides the terminal 10 with functions as the DHCP server and the DNS server. The control unit 21 also includes a list management unit 203. Details of the list management unit 203 will be described later.

The packet transmission unit 22 performs routing of a packet acquired from the interface unit 23. The packet transmission unit 22 hands over a packet directed to its own apparatus (the access point 20) to the control unit 21.

The interface unit 23 includes a WAN (Wide Area Network) interface unit 211, a LAN interface unit 212, and a wireless LAN interface unit 213.

The WAN interface unit 211 includes a WAN port and serves as an interface to a WAN (the fixed access network and the Internet) side.

The LAN interface unit 212 includes a LAN port and serves as an interface to a device connected by the Ethernet and the like in a wired manner.

The wireless LAN interface unit 213 includes a wireless antenna and serves as an interface to a wireless LAN-compatible device. As described above, the access point 20 supports the WMM QoS specification, and the wireless LAN interface unit 213 performs a QoS routing operation (QoS priority control) conforming to the IEEE 802.11e. Details of the wireless LAN interface unit 213 will be described later.

When packets received from a server and the like on the Internet are addressed to the personal computer 10-4, the packet transmission unit 22 outputs the packets to the LAN interface unit 212. When the packets received from the server and the like on the Internet are addressed to any one terminal of the smart phones 10-1 and 10-2 and the set-top box 10-3, the packet transmission unit 22 outputs the packets to the wireless LAN interface unit 213.

The storage unit 24 is a means for storing data, programs and the like required for the operation of the control unit 21. Furthermore, the storage unit 24 stores the priority control list. Details of the priority control list will be described later.

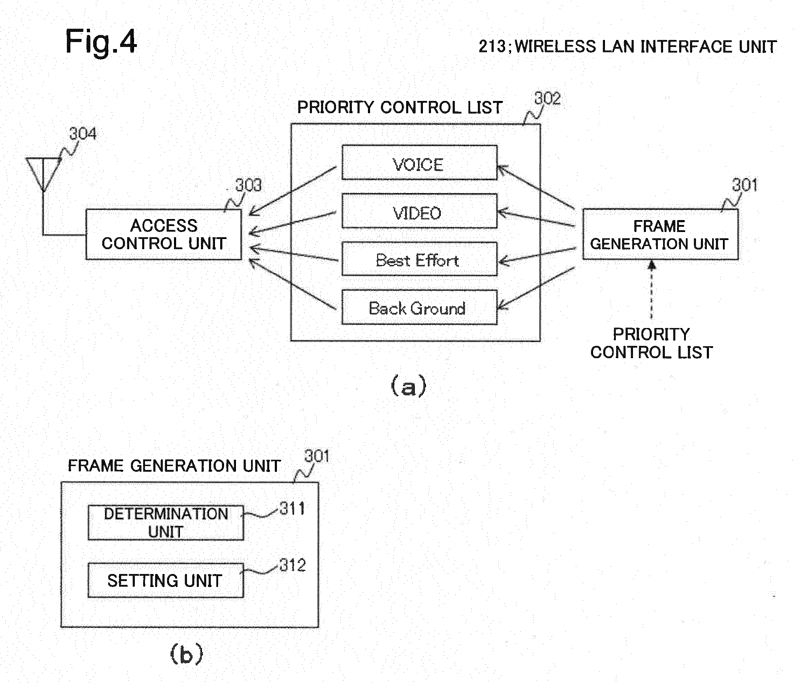

Fig. 4 is a diagram illustrating an example of an internal configuration of the wireless LAN interface unit 213. Referring to Fig. 4 (a), the wireless LAN interface unit 213 is configured to include a frame generation unit 301, a priority control unit 302, an access control unit 303, and a wireless antenna 304.

The frame generation unit 301 generates a MAC (Media Access Control) frame (also called a MAC packet) from the acquired IP packet. Specifically, the frame generation unit 301 adds a MAC header to the acquired IP packet, thereby generating the MAC frame. In this case, the frame generation unit 301 refers to the priority control list stored in the storage unit 24, and rewrites a part (a part of an IP header) of the acquired IP packet on the basis of the priority control list.

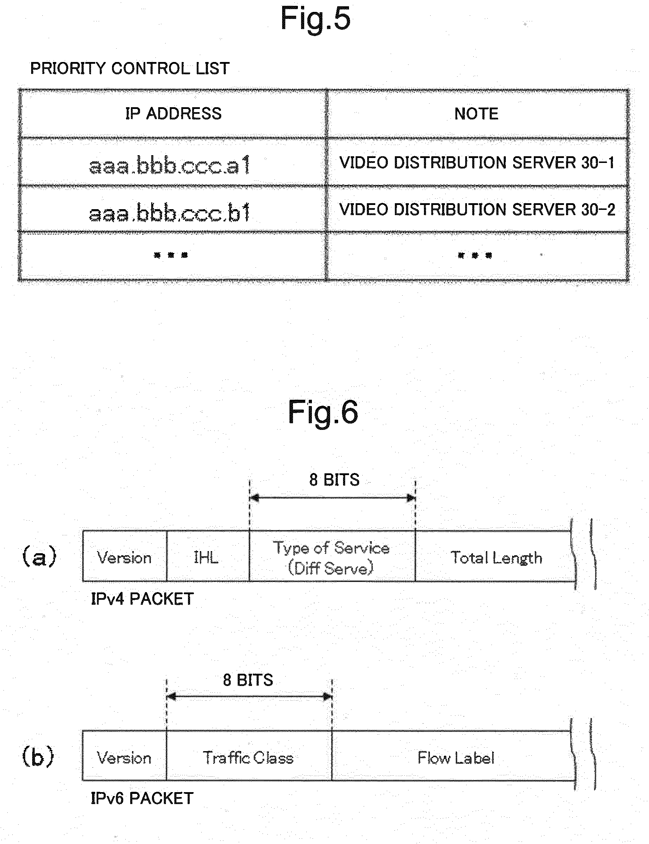

Fig. 5 is a diagram illustrating an example of the priority control list. Referring to Fig. 5, listed IP addresses are stored in the priority control list. For example, an IP address stored in the uppermost record is an IP address of a video distribution server 30-1 (see Fig. 2). Similarly, the second IP address from the top is an IP address of a video distribution server 30-2.

The frame generation unit 301 extracts a transmission source IP address from the IP header of the IP packet acquired from the packet transmission unit 22. The frame generation unit 301 determines whether an IP address coinciding with the transmission source IP address has been registered in the priority control list. When the extracted transmission source IP address coincides with the IP address registered in the priority control list, the frame generation unit 301 sets a priority level related to the VIDEO category in the QoS designation field of the IP header.

Specifically, when the acquired IP packet is an IPv4 packet, the frame generation unit 301 sets the priority level related to the VIDEO category in a ToS (Type of Service) field or a DS (Diff Serve) field in which the ToS field has been redefined (see Fig. 6 (a)). Alternatively, when the acquired IP packet is an IPv6 packet, the frame generation unit 301 sets the priority level related to the VIDEO category in a Traffic Class field (see Fig. 6 (b)).

When the extracted transmission source IP address has not been registered in the priority control list, the frame generation unit 301 does not perform the rewriting operation of the aforementioned QoS designation field. The frame generation unit 301 outputs the generated MAC frame to the priority control unit 302.

As described above, the frame generation unit 301 includes a determination unit 311 that determines whether the transmission source IP address of the received IP packet has been registered in the priority control list, and a setting unit 312 that sets a priority level in the QoS designation field in the IP header of the received IP packet (see Fig. 4 (b)).

The priority control unit 302 is a means for performing the QoS priority control defined by the IEEE 802.11e. Specifically, the priority control unit 302 performs priority control based on the EDCA scheme defined by the IEEE 802.11e. That is, the priority control unit 302 performs transmission control in accordance with the priority level, which has been set in the QoS designation field of the acquired MAC frame, with respect to the MAC frame. The priority control unit 302 includes four transmission queues illustrated in Fig. 4 (a). According to the EDCA scheme, the MAC frame is classified into four categories (VOICE, VIDEO, Best Effort, and Back Ground).

The priority control unit 302 maps the acquired MAC frame to transmission queues corresponding to a category designated in the QoS designation field. For example, when the "VOICE" has been set in the QoS designation field of the IP packet, the MAC frame including the IP packet is mapped to the transmission queue of the VOICE category. The MAC frame stored in the transmission queue is easily transmitted early as the priority level of the transmission queue is high. For example, when transmission of a plurality of MAC frames is overlappingly performed, MAC frames are sequentially sent starting from the MAC frame stored in a transmission queue with a higher priority level to the access control unit 303 in a normal case.

The four transmission queues illustrated in Fig. 4 have a high priority level sequentially from the top. Specifically, the transmission queue corresponding to the VOICE category has the highest priority level and the transmission queue corresponding to the Back Ground category has the lowest priority level.

The access control unit 303, for example, performs CSMA (Carrier Sense Multiple Access) access control for each transmission queue. The access control unit 303 acquires the MAC frame from the priority control unit 302 and transmits the MAC frame to a corresponding terminal from the wireless antenna 304.

Next, the list management unit 203 illustrated in Fig. 3 will be described.

The list management unit 203 is a means for managing the priority control list stored in the storage unit 24. The priority control list can be stored in the storage unit 24 in advance in the manufacturing stage of the access point 20. However, when operating a communication system including the access point 20, it is preferable that a user, a communication provider and the like can update the priority control list in terms of convenience.

In this regard, a function of updating the priority control list is provided to a user or a communication provider by the list management unit 203. For the update of the priority control list, various methods are considered.

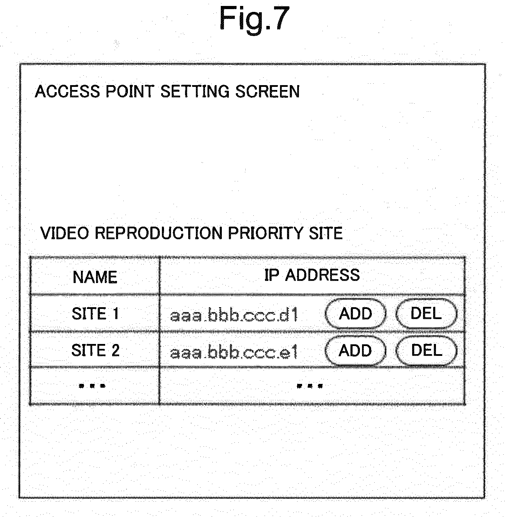

For example, it is considered that a user creates and updates the priority control list. In this case, a user interface for setting the priority control list is provided in a setting menu in which a user sets the access point 20 (see Fig. 7). The list management unit 203 generates an interface screen as illustrated in Fig. 7 and transmits the interface screen to the terminal 10 (a terminal logged in the setting menu) operated by the user.

When a user operates a browser and the like and thus inputs an IP address of a video distribution server to which the user d to give priority with respect to video reproduction, the list management unit 203 updates the priority control list in the storage unit 24 in response to the input.

Alternatively, the priority control list may be registered in an external database server and may be regularly acquired from the access point 20. For example, the IP address of the video distribution server 30-1 is registered in a database 30-4 illustrated in Fig. 2 in the priority control list. The list management unit 203 accesses the database 30-4 at the time of initial start of the access point 20 or at a predetermined timing, and acquires the priority control list. The list management unit 203 registers the acquired priority control list in the storage unit 24. When the database 30-4 is managed by a communication provider or a manufacturing maker of the access point 20, a priority control list desired by the communication provider and the like is reflected in the access point 20.

Alternatively, instead of storing the priority control list in the storage unit 24 of the access point 20, the priority control list may be registered in the external database 30-4 and the database 30-4 may be accessed from the access point 20 according to necessity. In this case, whenever an unknown transmission source IP address is extracted, the frame generation unit 301 accesses the database 30-4 and inquires of the database 30-4 whether the transmission source IP address is subjected to priority control. The frame generation unit 301 sets a priority level in a QoS designation field of an IP header in response to a reply from the database server. As described above, it may be configured such that a communication provider and the like directly change the priority control list registered in the database 30-4.

Next, the operation of the access point 20 will be described.

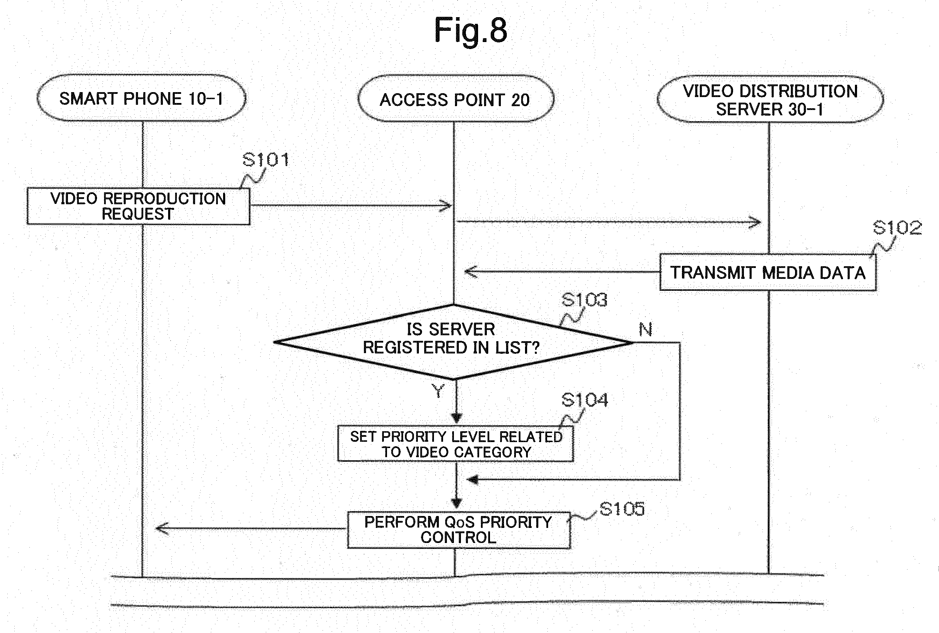

Fig. 8 is an example of a sequence diagram for explaining the operation of the access point 20. In explaining the operation of the access point 20, it is assumed that the IP address of the video distribution server 30-1 illustrated in Fig. 2 has been registered in the priority control list and the IP address of the video distribution server 30-3 has not been registered in the priority control list.

The smart phone 10-1 transmits a video reproduction request to the video distribution server 30-1 (step S101).

The video distribution server 30-1 transmits media data toward the smart phone 10-1 in response to the received video reproduction request (step S102).

The access point 20 receives the media data (an IP packet) transmitted from the video distribution server 30-1. Since the IP packet transmitted from the video distribution server 30-1 is an IP packet addressed to the smart phone 10-1, the packet is sent to the wireless LAN interface unit 213. The frame generation unit 301 of the wireless LAN interface unit 213 compares a transmission source IP address stored in an IP header with an IP address stored in the priority control list, and determines whether the transmission source IP address has been registered in the priority control list.

That is, the frame generation unit 301 determines whether the video distribution server 30-1 has been registered as a video distribution server to be subjected to priority control (step S103). Since the IP address of the video distribution server 30-1 has been stored in the transmission source IP address of the packet received by the access point 20 and has been registered in the priority control list, a process of step S104 is performed (Yes in step S103).

In step S104, the frame generation unit 301 sets a priority level related to the VIDEO category in the QoS designation field of the received IP packet.

A MAC frame generated by the frame generation unit 301 is sent to the priority control unit 302. The priority control unit 302 performs transmission control (QoS priority control) in accordance with the priority level of the VIDEO category (step S105).

When the smart phone 10-1 transmits the video reproduction request to the video distribution server 30-3, since the IP address of the server has not been registered in the priority control list (No in step S103), the QoS designation field of an IP packet from the server is not rewritten. In this case, the QoS priority control in accordance with the QoS designation field stored in the IP header received by the access point 20 is performed (step S105).

For example, it is assumed that the video distribution server 30-3 has set the VIDEO category in the QoS designation field of the IP packet based on media data. In this case, when the packet has reached the access point 20, if the priority level of the VIDEO category is maintained (if the QoS designation field has not been reset), the media data by the video distribution server 30-3 can also receive a benefit of the QoS priority control for the VIDEO category. However, as described above, when the IP packet passes through a router and the like on the Internet, if the value of the QoS designation field is reset, the media data from the video distribution server is not transmitted in preference to other types of data.

Alternatively, there is considered a case in which setting of a QoS designation field is invalid only when media data reaches the access point 20 via a specific router. In such a case, when the media data does not pass through the aforementioned router, video reproduction from the video distribution server 30-3 may be stable, and when the media data passes through the router, the video reproduction may not be stable.

On the other hand, for the media data from the video distribution server 30-1 registered in the priority control list, setting for QoS priority control is valid independently of a transfer path of a packet. Therefore, if there is no situation such as a case in which a communication channel of a wireless LAN is in extremely stringent condition, the smart phone 10-1 can stably reproduce a video from the video distribution server 30-1.

As described above, the access point 20 according to the first exemplary embodiment stores an IP address of an apparatus (for example, the video distribution server 30-1), which is preferably subjected to QoS priority control, as whitelisted. When an IP packet including a transmission source IP address coinciding with the white list is received, the access point 20 sets a high priority level (for example, the VIDEO category) in the QoS designation field of the packet. As a consequence, it is possible to perform QoS priority control with respect to media data (video data) from an apparatus desired by a user or a communication provider, independently of the presence of a router and the like that reset the QoS designation field.

Hereinafter, the case in which users of the smart phones 10-1 and 10-2 make a contract with a communication provider A will be considered. Furthermore, it is assumed that the video distribution server 30-1 is operated by the communication provider A and the access point 20 is rent to the users from the communication provider A. In such a situation, the communication provider A normally desires video reproduction from the video distribution server 30-1 operated by themselves to be preferential to video reproduction from a video distribution server (for example, the video distribution server 30-3) operated by another company. In this case, even though the video distribution server 30-1 sets a priority level of the VIDEO category in a QoS designation field of an IP packet and transmits media data, it is probable that the setting of the priority level will be invalid during transmission on the Internet. That is, even though the communication provider A desires video reproduction from a video distribution server to be preferentially performed, it is not guaranteed that such priority control is actually valid.

However, since the access point 20 according to the first exemplary embodiment sets a priority level in a QoS designation field of a received packet by itself, QoS priority control for media data from the video distribution server 30-1, which control is desired by the communication provider A, can be set.

Furthermore, the communication provider A, by introducing a mechanism capable of updating a priority control list, can designate an apparatus (a server) that flexibly performs priority control in accordance with a business strategy and the like of the communication provider A. For example, when the communication provider B operates the video distribution server 30-3 and the communication provider A and the communication provider B have made a business alliance, adding the video distribution server 30-3 to the priority control list and the like can be easily performed.

### [Second exemplary embodiment]

A second exemplary embodiment will be described in more detail with reference to the drawings.

Since there is no difference between a basic configuration of an access point 20a according to the second exemplary embodiment and the access point 20 according to the first exemplary embodiment, a description of the access point 20a corresponding to Fig. 3 and Fig. 4 will be omitted.

In the first exemplary embodiment, the case in which an IP address of a video distribution server has been registered in the priority control list has been described. In the second exemplary embodiment, a description will be provided for a case in which a host name of a video distribution server is registered in the priority control list.

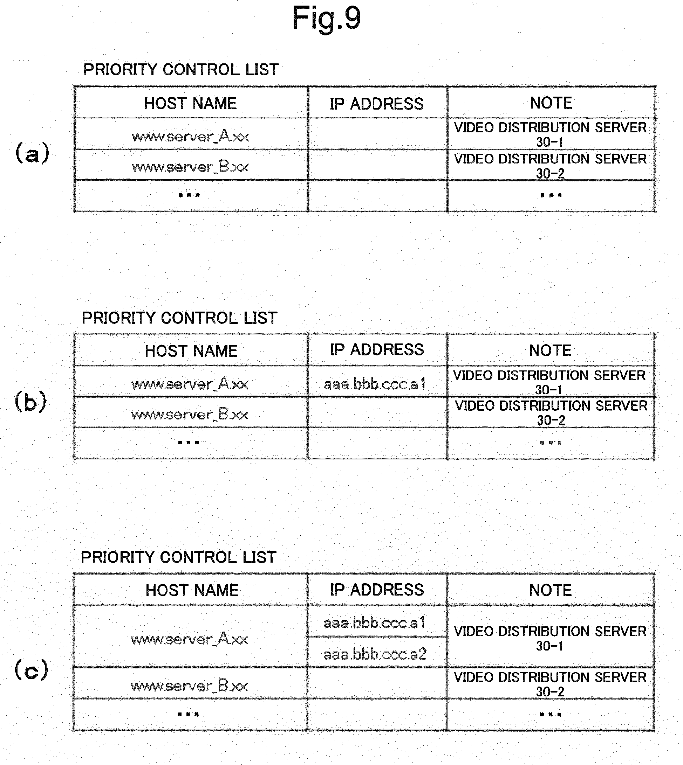

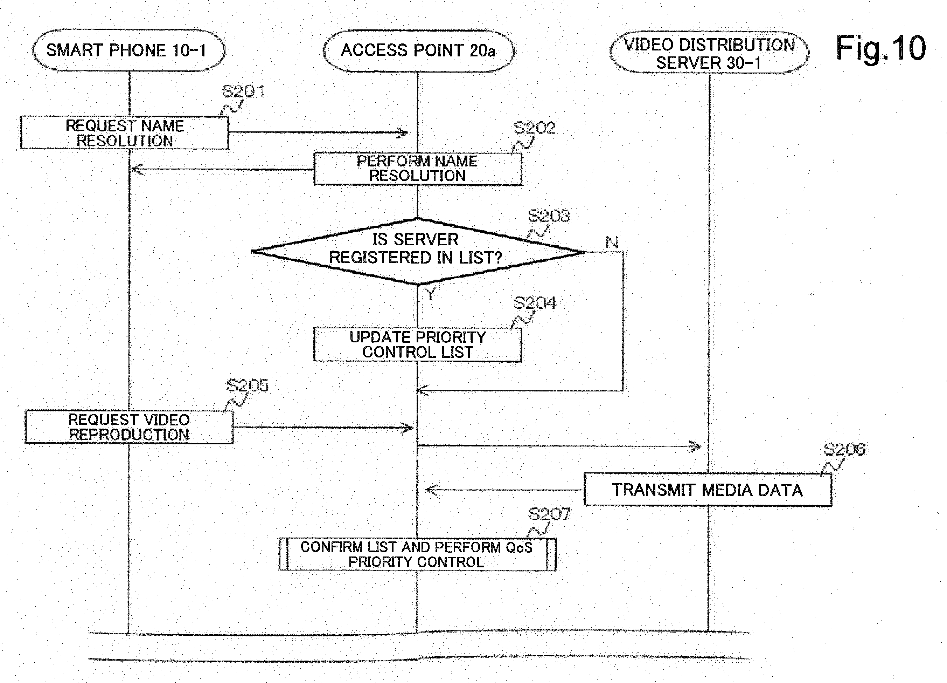

Fig. 9 is a diagram illustrating an example of the priority control list according to the second exemplary embodiment. Fig. 10 is an example of a sequence diagram for explaining an operation of the access point 20a.

With reference to Fig. 9 and Fig. 10, an operation of the access point 20a will be described. Fig. 9 (a) illustrates an initial state of the priority control list.

Referring to Fig. 10, in order to access the video distribution server 30-1, the smart phone 10-1 transmits a request of name resolution of the target video distribution server 30-1 to the access point 20a (step S201).

After the request of the name resolution is received from the smart phone 10-1, the access point 20a starts the name resolution unit 202 therein and acquires an IP address of the video distribution server 30-1 (step S202). Specifically, the name resolution unit 202 sequentially accesses hierarchized DNS servers, thereby acquiring the IP address of the video distribution server 30-1. The name resolution unit 202 notifies the smart phone 10-1 of the acquired IP address and hands over the host name, for which the name resolution has been requested, and the acquired IP address to the list management unit 203.

The list management unit 203 searches for a priority control list and determines whether a host name coinciding with the host name acquired from the name resolution unit 202 has been registered (step S203).

Referring to Fig. 9 (a), since the host name of the video distribution server 30-1 has been registered in the uppermost record of the priority control list, a process of step S204 is performed (Yes in step S203).

In step S204, the list management unit 203 adds the acquired IP address to an IP address field of the record of the priority control list in which the host name acquired from the name resolution unit 202 has been registered.

Fig. 9 (b) is a diagram illustrating an example of the priority control list after the IP address of the video distribution server 30-1 is added. Referring to Fig. 9 (b), the IP address of the video distribution server 30-1 has been added to the priority control list.

Next, the smart phone 10-1 transmits a video reproduction request to the video distribution server 30-1 by using the acquired IP address (the IP address of the video distribution server 30-1) (step S205). The video distribution server 30-1 transmits media data of the requested video toward the smart phone 10-1 (step S206). The access point 20a receives the media data and performs the confirmation of the priority control list, the rewriting of the QoS designation field, and QoS priority control described in the first exemplary embodiment (step S207).

A well-known video distribution server employs a configuration called DNS round-robin or CDN (Contents Delivery Network) for the purpose of load balancing in many cases. Accordingly, when the name resolution unit 202 has performed name resolution regarding host names of video distribution servers, a plurality of IP addresses are notified from the DNS server. In this case, the name resolution unit 202 hands over the plurality of IP addresses to the list management unit 203.

The list management unit 203 adds the plurality of IP addresses to an IP address field of a corresponding host. For example, when two IP addresses "aaa.bbb.ccc.a1" and "aaa.bbb.ccc.a2" are notified as the IP addresses of the video distribution server 30-1, the list management unit 203 registers these IP addresses in the priority control list by associating these IP addresses with the video distribution server 30-1 (see Fig. 9 (c)).

Even when a plurality of IP addresses have been registered for the same host name, there is no influence on the operation of the frame generation unit 301. This is because the frame generation unit 301 compares an IP address registered in the priority control list with a transmission source IP address of an IP packet acquired from a network, and performs control of rewriting a QoS designation field of an IP header when the two IP addresses coincide with each other.

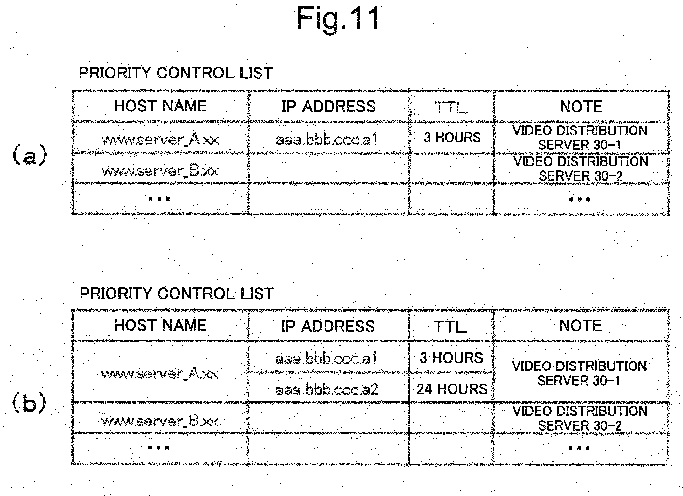

Furthermore, when the name resolution unit 202 performs name resolution, it is possible to acquire an IP address and a survival time (TTL: Time To Live) of the IP address. The list management unit 203 may also register the survival time of the IP address in the priority control list (see Fig. 11 (a) and Fig. 11 (b)). After the survival time registered in correspondence to each IP address passes, the list management unit 203 erases the corresponding IP address.

Even in the case of registering host names of video distribution servers in the priority control list, it is possible to apply the input method of the priority control list described in the first exemplary embodiment. Specifically, in the setting screen illustrated in Fig. 7, instead of an IP address of a video distribution server to which priority is preferentially given with respect to video reproduction, an interface for inputting the host name of the video distribution server is prepared. When a user inputs a host name of the video distribution server, the list management unit 203 registers the host name of the video distribution server in the priority control list.

As described above, the access point 20a according to the second exemplary embodiment does not register an IP address in the priority control list, and registers a host name of a video distribution server to be subjected to priority control. Furthermore, the access point 20a updates the priority control list when an IP address regarding the registered host name is acquired from the DNS server. Therefore, a user or a communication provider can generate and manage the priority control list by using host names of more easily manageable video distribution servers.

Furthermore, the access point 20a uses the survival time of the acquired IP address in updating the priority control list, so that maintenance of the priority control list by a user or a communication provider is not necessary even though there is a change in IP addresses of video distribution servers.

### [Third exemplary embodiment]

Subsequently, a third exemplary embodiment will be described in more detail with reference to the drawings.

Since there is no difference between a basic configuration of an access point 20b according to the third exemplary embodiment and the access point 20 according to the first exemplary embodiment, a description of the access point 20b corresponding to Fig. 3 and Fig. 4 will be omitted.

In the first and second exemplary embodiments, the priority control for media data (video data) from video distribution servers has been described. However, the media data to be subjected to the priority control is not limited to data transmitted from the video distribution servers. For example, when a communication provider provides an IP telephony service, the priority control may be performed for media data (voice data) transmitted from terminals of the Internet side.

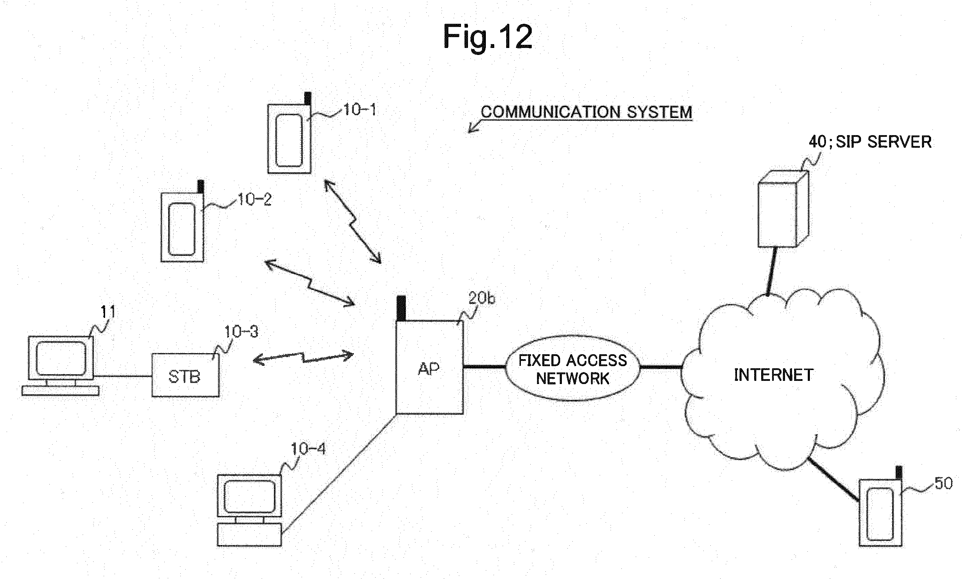

For example, the case in which IP to IP communication is performed between the smart phone 10-1 and a terminal 50 illustrated in Fig. 12 will be considered. In this case, an SIP (Session Initiation Protocol) server 40 performs call control between both terminals. It is assumed that a communication provider that provides a communication service to the smart phone 10-1 and the terminal 50 and a communication provider that operates the SIP server 40 are identical.

The SIP server 40 receives a connection request from one of the smart phone 10-1 and the terminal 50, and transmits an update request of a priority control list to the access point 20b when connection permission is received from the other terminal. In this case, the update request transmitted to the access point 20b from the SIP server 40 includes an IP address (an IP address the terminal 50 in the aforementioned example) of a connection destination apparatus.

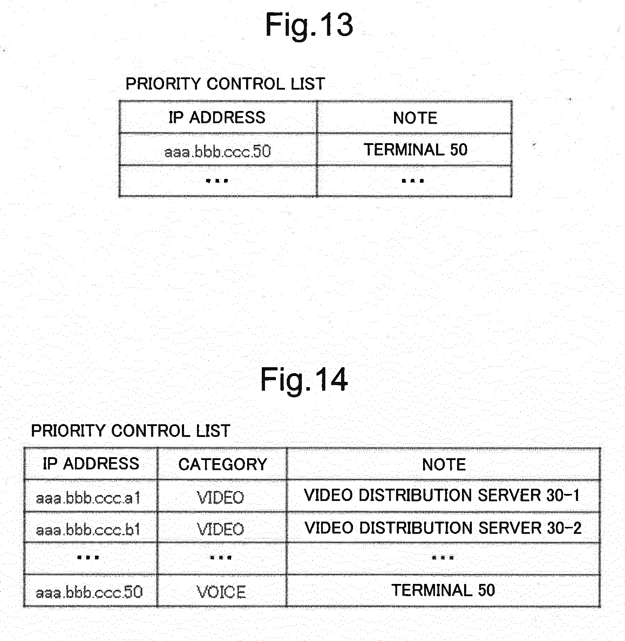

The list management unit 203 having received the update request of the priority control list registers the IP address included in the update request in the priority control list. For example, referring to Fig. 13, "aaa.bbb.ccc.50" is registered in the priority control list as the IP address of the terminal 50.

The frame generation unit 301 compares the transmission source IP address of the media data (the IP packet) received from the Internet side with the IP address registered in the priority control list. When the two IP addresses coincide with each other, the frame generation unit 301 sets a priority level related to the VOICE category in the QoS designation field of the received IP packet, and outputs a MAC frame to the priority control unit 302.

The priority control unit 302 performs QoS priority control according to the VOICE category of the IEEE 802.11e with respect to the MAC frame. As a consequence, the access point 20b preferentially deals with the voice data transmitted toward the smart phone 10-1 from the terminal 50, so that it is possible to improve communication quality between both terminals.

In addition, it is possible to combine the priority control with respect to the video distribution server described in the first and second exemplary embodiments with the priority control with respect to the connection partner of the IP telephone described in the third exemplary embodiment. In this case, it is sufficient if management of the priority control list is allowed to be adapted to the two types of priority control.

For example, as illustrated in Fig. 14, a field (a flag) indicating which of the VOICE category and the VIDEO category is to be set in one priority control list may be provided. Alternatively, it may be divided into two lists such as a first priority control list for setting the VIDEO category and a second priority control list for setting the VOICE category.

As described above, the access point 20b according to the third exemplary embodiment performs the QoS priority control defined as the VOICE category with respect to the media data (the voice data) transmitted from the connection partner of the IP telephone. As a consequence, the access point 20b can provide users with comfortable communication environments.

The aforementioned exemplary embodiments can be combined with one another as long as their contents do not conflict with one another. Furthermore, the system configurations illustrated in Fig. 2 and Fig. 12 are for illustrative purposes only and do not intend to limit a system configuration. For example, the communication system including the access point 20 may not be connected to an open network such as the Internet. That is, video distribution servers and the like may not be installed on the Internet, and a system may be operated in a closed network including the communication system, the video distribution servers and the like illustrated in Fig. 2.

Furthermore, in the first to third exemplary embodiments, the description has been provided on the assumption that the access point 20 operates as a home gateway installed at a user's house. However, the access point 20 may be an access point installed at a public facility such as a station or an airport and providing wireless access to unspecified users. In a priority control list set in such an access point, for example, an IP address and a host name of a video distribution server for distributing content with high publicness can be registered.

Furthermore, the configuration (Fig. 3, Fig. 4 and the like) of the access point (a communication apparatus) 20 described in the first to third exemplary embodiments is for illustrative purposes only, and does not intend to limit the configuration of the access point 20. For example, the access point 20 may not have a function as a broadband router and may be an apparatus that provides wireless LAN access to wireless LAN-compatible devices. Specifically, it is sufficient if the access point 20 is a communication apparatus capable of generating a MAC frame in accordance with a priority control list and performing QoS priority control according to a setting value of a QoS designation field embedded in the MAC frame.

In addition, for example, the comparison of the transmission source IP address of the received IP packet and the IP address registered in the priority control list and the setting of the priority level in the QoS designation field of the IP packet, which are performed by the frame generation unit 301, may be performed by the packet transmission unit 22.

The access point 20 according to the first to third exemplary embodiments sets a priority level in the QoS designation field of the IP packet (the IP header) having the transmission source IP address coinciding with the IP address registered in the priority control list. The IP address registered in the priority control list can also be used for other purposes. For example, the access point 20 may set, for example, a priority level related to Best Effort in a QoS designation field of an IP packet having a transmission source IP address that is not an IP address registered in the priority control list. That is, the access point 20 may reset once QoS priority level setting set by a video distribution server and the like, and may employ only a packet from an apparatus, which has been subjected to QoS priority control set by a user, a communication provider or the like by using a priority control list, as a QoS priority control target.

Alternatively, a situation, in which only a specific video distribution server transmits media data with an excessively large size and occupies resources, will be considered. In such a case, the access point 20 may store an IP address of the video distribution server in a non-priority control list (a blacklist), and set a low priority level (for example, Best Effort) in a QoS designation field of an IP packet from the video distribution server. That is, even though the video distribution server as described above sets a high priority level (for example, a priority level related to VIDEO is set) in the QoS designation field of the IP packet, the access point 20 may reset the priority level and ensure fairness with other video distribution servers.

As described above, when a transmission source IP address not coinciding with the IP address registered in the priority control list is extracted, the frame generation unit 301 can perform at least the following countermeasures. Firstly, the frame generation unit 301 does not rewrite the QoS designation field of the received IP packet and outputs the IP packet to the priority control unit 302 as is. Secondly, the frame generation unit 301 sets a priority level (for example, a priority level related to Best Effort), which is different from a priority level in accordance with the priority control list, in the QoS designation field of the received IP packet, and outputs the IP packet to the priority control unit 302. Thirdly, the frame generation unit 301 refers to a list (a blacklist) different from the priority control list. Then, when an IP address registered in the blacklist and the transmission source IP address coincide with each other, the frame generation unit 301 sets a priority level in accordance with the blacklist in the QoS designation field of the received IP packet, and outputs the IP packet to the priority control unit 302.

The access point 20 according to the first to third exemplary embodiments uses the WMM QoS specification defined by the IEEE 802.11e when performing the QoS priority control. However, the content of the priority control performed by the access point 20 may be independently decided.
That is, it is sufficient if a priority level set by the frame generation unit 301 and priority control performed by the priority control unit 302 are consistent with each other. The access point 20 performs independently priority level control, so that it is possible to more finely set a priority level in a received packet.

In the first to third exemplary embodiments, the case in which the priority control list can be updated (changed) by the list management unit 203 has been described. However, the priority control list may not be necessarily updatable, and when priority control is permanently performed for media data from the same video distribution server, it is sufficient if the access point 20 stores an IP address of the video distribution server.

Furthermore, the control unit 21, the wireless LAN interface unit 213 and the like of the access point 20 are implemented, for example, by causing a CPU (Central Processing Unit) to execute a program. That is, the control unit 21 and the like can be implemented by a computer program that causes a computer installed in the access point 20 to perform the aforementioned each process by using hardware of the computer. Furthermore, the program can be downloaded via a network, or can be updated using a storage medium stored with the program.

The whole or a part of the aforementioned exemplary embodiments can also be written in the following Supplementary notes, but is not limited thereto.

### [Supplementary note 1]

A communication apparatus including
a determination means that determines whether a transmission source address of a received packet has been registered in a priority control list as an address of a first apparatus,
a setting means that sets a first priority level in a predetermined field in a header of the received packet when the transmission source address of the received packet has been registered in the priority control list as the address of the first apparatus, and
a priority control means that performs transmission control in accordance with the first priority level with respect to the received packet in which the first priority level has been set.

### [Supplementary note 2]

The communication apparatus according to Supplementary note 1, further including
a storage means that stores the priority control list, and
a list management means that manages the priority control list.

### [Supplementary note 3]

The communication apparatus according to Supplementary note 2,
wherein the storage means stores the priority control list by associating a host name of the first apparatus with an address of the first apparatus.

### [Supplementary note 4]

The communication apparatus according to Supplementary note 3, further including
a name resolution means that resolves an address from the host name,
wherein, in the priority control list, the host name of the first apparatus is registered as an apparatus to which the first priority level is set,
the name resolution means outputs the host name of the first apparatus and the address of the first apparatus to the list management means when having acquired the address from the host name of the first apparatus, and
the list management means updates the priority control list by associating the host name of the first apparatus registered in advance with the address of the first apparatus acquired from the name resolution means.

### [Supplementary note 5]

The communication apparatus according to Supplementary note 4, wherein the name resolution means outputs, to the list management means, the host name of the first apparatus and a plurality of addresses acquired as the address of the first apparatus, and
the list management means updates the priority control list by associating the host name of the first apparatus registered in advance with the plurality of addresses acquired from the name resolution means.

### [Supplementary note 6]

The communication apparatus according to Supplementary note 4 or 5,
wherein the name resolution means outputs, to the list management means, the host name of the first apparatus, the address of the first apparatus, and a survival time set for the address of the first apparatus, and
the list management means updates the priority control list by associating the host name of the first apparatus registered in advance with the address of the first apparatus and the survival time acquired from the name resolution means, and, when the survival time is expired, deletes the address of the first apparatus corresponding to the expired survival time.

### [Supplementary note 7]

The communication apparatus according to any one of Supplementary notes 1 to 6,
wherein, in the priority control list, the address of the first apparatus is registered as an address of an apparatus to which the first priority level is set and an address of a second apparatus to which a second priority level is set is registered,
the setting means sets the second priority level in a predetermined field in the header of the received packet when the transmission source address of the received packet has been registered in the priority control list as the address of the second apparatus; and
the priority control means performs transmission control in accordance with the second priority level with respect to a received packet in which the second priority level has been set.

### [Supplementary note 8]

The communication apparatus according to any one of Supplementary notes 1 to 7,
wherein the first apparatus is a video distribution server.

### [Supplementary note 9]

The communication apparatus according to Supplementary note 7 or 8,
wherein the second apparatus is a connection destination apparatus in packet communication.

### [Supplementary note 10]

A communication method including
determining whether a transmission source address of a received packet has been registered in a priority control list as an address of a first apparatus,
setting a first priority level in a predetermined field in a header of the received packet when the transmission source address of the received packet has been registered in the priority control list as the address of the first apparatus, and
performing transmission control in accordance with the first priority level with respect to the received packet in which the first priority level has been set.

### [Supplementary note 11]

A storage medium stored with a program that causes a computer for controlling a communication apparatus to perform
a process of determining whether a transmission source address of a received packet has been registered in a priority control list as an address of a first apparatus,
a process of setting a first priority level in a predetermined field in a header of the received packet when the transmission source address of the received packet has been registered in the priority control list as the address of the first apparatus, and
a process of performing transmission control in accordance with the first priority level with respect to the received packet in which the first priority level has been set.

In addition, the mode of the Supplementary note 10 and the mode of the Supplementary note 11 can be developed to the mode of the Supplementary note 2 and the mode of the Supplementary note 9, similarly to the mode of the Supplementary note 1.

In addition, the disclosure of the aforementioned cited PTL is incorporated herein by reference. Within the scope of the entire disclosure (including the appended claims) of the present invention, modification and adjustment of the exemplary embodiments or examples are further possible on the basis of the basic technical idea thereof. Furthermore, within the scope of the entire disclosure of the present invention, various combinations or selections of various disclosure elements (including each element of each claim, each element of each exemplary embodiment or example, each element of each drawing, and the like) are possible. That is, it is a matter of course that the present invention includes various modifications and corrections that can be obtained by those skilled in the art according to the entire disclosure including the appended claims and the technical idea. Particularly, for a numerical value range disclosed herein, it should be noted that an arbitrary numerical value or a small range included in the range has been disclosed in detail even though there is no particular mention.

So far, the present invention has been described with reference to the exemplary embodiments (and the examples); however, the present invention is not limited to the aforementioned exemplary embodiments (and the examples). Various modifications that can be understood by a person skilled in the art can be made to the configuration and details of the present invention within the scope thereof.

This application is based upon and claims the benefit of priority from Japanese patent application No. 2014-218987, filed on October 28, 2014, the disclosure of which is incorporated herein in its entirety by reference.

### [Reference signs List]

- 10, 50: terminal
- 10-1, 10-2: smart phone
- 10-3: set-top box (STB)
- 10-4: personal computer
- 11: television
- 20, 20a, 20b: access point (AP)
- 21: control unit
- 22: packet transmission unit
- 23: interface unit
- 24: storage unit
- 30-1 to 30-3: video distribution server
- 30-4: database server
- 40: SIP server
- 100: communication apparatus
- 101, 311: determination unit
- 102, 312: setting unit
- 103, 302: priority control unit
- 201: DHCP unit
- 202: name resolution unit
- 203: list management unit
- 211: WAN interface unit
- 212: LAN interface unit
- 213: wireless LAN interface unit
- 301: frame generation unit
- 303: access control unit
- 304: wireless antenna

## Claims

1. A communication apparatus comprising:
a determination means that determines whether a transmission source address of a received packet has been registered in a priority control list as an address of a first apparatus;
a setting means that sets a first priority level in a predetermined field in a header of the received packet when the transmission source address of the received packet has been registered in the priority control list as the address of the first apparatus; and
a priority control means that performs transmission control in accordance with the first priority level with respect to the received packet in which the first priority level has been set.

2. The communication apparatus according to Claim 1, further comprising:
a storage means that stores the priority control list; and
a list management means that manages the priority control list.

3. The communication apparatus according to Claim 2, wherein the storage means stores the priority control list by associating a host name of the first apparatus with an address of the first apparatus.

4. The communication apparatus according to Claim 3, further comprising:
a name resolution means that resolves an address from the host name,
wherein, in the priority control list, the host name of the first apparatus as an apparatus for setting the first priority level is registered,
the name resolution means outputs the host name of the first apparatus and the address of the first apparatus to the list management means when having acquired the address from the host name of the first apparatus, and
the list management means updates the priority control list by associating the host name of the first apparatus registered in advance with the address of the first apparatus acquired from the name resolution means.

5. The communication apparatus according to Claim 4,
wherein the name resolution means outputs, to the list management means, the host name of the first apparatus and a plurality of addresses acquired as the address of the first apparatus, and
the list management means updates the priority control list by associating the host name of the first apparatus registered in advance with the plurality of addresses acquired from the name resolution means.

6. The communication apparatus according to Claim 4 or 5,
wherein the name resolution means outputs, to the list management means, the host name of the first apparatus, the address of the first apparatus, and a survival time set in the address of the first apparatus, and
the list management means updates the priority control list by associating the host name of the first apparatus registered in advance with the address of the first apparatus and the survival time acquired from the name resolution means, and, when the survival time is expired, deletes the address of the first apparatus corresponding to the expired survival time.

7. The communication apparatus according to any one of Claims 1 to 6, wherein, in the priority control list, the address of the first apparatus is registered as an address of an apparatus to which the first priority level is set and an address of a second apparatus to which a second priority level is set is registered,
the setting means sets the second priority level in a predetermined field in the header of the received packet when the transmission source address of the received packet has been registered in the priority control list as the address of the second apparatus; and
the priority control means performs transmission control in accordance with the second priority level with respect to a received packet in which the second priority level has been set.

8. The communication apparatus according to any one of Claims 1 to 7,
wherein the first apparatus is a video distribution server.

9. The communication apparatus according to Claim 7 or 8,
wherein the second apparatus is a connection destination apparatus in packet communication.

10. A communication method comprising:
determining whether a transmission source address of a received packet has been registered in a priority control list as an address of a first apparatus;
setting a first priority level in a predetermined field in a header of the received packet when the transmission source address of the received packet has been registered in the priority control list as the address of the first apparatus; and
performing transmission control in accordance with the first priority level with respect to the received packet in which the first priority level has been set.

11. A storage medium stored with a program that causes a computer for controlling a communication apparatus to perform:
a process of determining whether a transmission source address of a received packet has been registered in a priority control list as an address of a first apparatus;
a process of setting a first priority level in a predetermined field in a header of the received packet when the transmission source address of the received packet has been registered in the priority control list as the address of the first apparatus; and
a process of performing transmission control in accordance with the first priority level with respect to the received packet in which the first priority level has been set.
